(19) Europäisches Patentamt

European Patent Office

Office européen des brevets

(11) Publication number: **0 562 203 A1**

# EUROPEAN PATENT APPLICATION

(21) Application number: **92430009.8**

(22) Date of filing: **24.03.92**

(51) Int. Cl.⁵: **C08F 4/69**, C08F 10/02,
C08F 2/34

(43) Date of publication of application:
**29.09.93 Bulletin 93/39**

(84) Designated Contracting States:
**FR**

(71) Applicant: **BP CHEMICALS S.N.C.**
**Tour Neptune la Défense 1, 20, Place de Seine**
**F-92400 Courbevoie(FR)**

(72) Inventor: **Speakmann, John Gabriel**
**BP Chemicals S.N.C., Centre de Rech. Ser.Prop.Indu**
**BP N 6 F-13117 Lavera(FR)**

(74) Representative: **Hymers, Ronald Robson**
**c/o BP Chemicals S.n.c., Centre de Recherche, Service Propriété, Industrielle**
**B.P. no. 6**
**F-13117 Lavera (FR)**

(54) **Process for the preparation of a polymerisation catalyst.**

(57) Process for polymerisation of ethylene or copolymerisation of ethylene and at least one other alpha-olefin comprising from 3 to 12 atoms of carbon. The process involves the catalyst being prepared by (a) depositing an organo-metallic compound of aluminium on a dried refractory oxide, (b) drying the product at a temperature of between 200°C and 800°C, (c) contacting the product with a compound comprising chromium, (d) thermally activating the product at a temperature of between 350°C and 900° under a non-reducing atmosphere. The product is then used in the polymerisation with an organo-metallic compound of formula $MR_n$ in which M is a metal selected from the group consisting of boron, aluminium, magnesium and zinc, R is an alkyl group made up of 1 to 12 atoms of carbon and n is a whole number corresponding to the valency of the metal M. Preferably the organo-metallic compound is present such that the atomic ratio M/Cr lies between 0.1 and 15.

The process enables the production of (co) polymers of ethylene having a higher melt index which can be easily moulded by extrusion or blow moulding into hollow bodies or film.

EP 0 562 203 A1

Rank Xerox (UK) Business Services
(3. 10/3.6/3.3. 1)

The present invention relates to a process for the polymerisation of ethylene or copolymerisation of ethylene or alpha olefin, for example, in the gas phase. The catalyst comprises a chromium oxide associated with a granular support comprising a refractory oxide and activated by heat treatment.

It is already known that ethylene can be polymerised alone or in a mixture with alpha olefins in the presence of catalyst comprising a chromium oxide compound associated with granular support comprising a refractory oxide and activated by heat treatment. Thus GB 1429174 discloses the preparation of a catalyst for the polymerisation of olefins in which the catalyst comprises a chromium oxide and a refractory oxide support.

It is known to manufacture ethylene polymers according to processes for polymerisation in the gaseous phase using a catalyst based on chromium, activated thermally and prepared by depositing an organo-aluminium compound and a complex of trivalent chromium having 1.3 dicarbonylated ligands on a previously dried silica (see French patent application No. 2398083). These polymers have a somewhat low melt index having regard to the polymerisation temperature needed to make them, and it is observed that they are not suited for moulding of finished items by extrusion or by blow moulding.

The invention relates to a process for manufacture in the gaseous phase of polyethylene of high or medium density (0.940 < d < 0.965) using a catalyst on a chromium oxide base, prepared using a silica previously impregnated with an organo-aluminium compound. This catalyst is used in combination with an organo-metallic compound. This compound makes it possible to manufacture polyethylenes having a high melt index, and hence suitable for the moulding by extrusion or blow moulding of hollow bodies or film.

A process has now been found for (co) polymerisation of ethylene in the gaseous phase using a catalyst on a chromium base modified by the presence of aluminium making it possible to obtain (co) polymers of ethylene having a higher melt index which can be easily moulded by extrusion or blow moulding into hollow bodies or film.

Thus according to the present invention there is provided a process for polymerisation of ethylene or copolymerisation of ethylene and at least one other alpha-olefin comprising from 3 to 12 atoms of carbon, preferably in the gaseous phase, the process being characterised by the catalyst being prepared by (a) depositing an organo-metallic compound of aluminium on a dried refractory oxide, (b) drying the product at a temperature of between 200°C and 800°C, (c) contacting the product with a compound comprising chromium, (d) thermally activating the product at a temperature of between 350°C and 900° under a non-reducing atmosphere and (e) the product being used in the polymerisation with an organo-metallic compound of formula $MR_n$ in which M is a metal selected from the group consisting of boron, aluminium, magnesium and zinc, R is an alkyl group made up of 1 to 12 atoms of carbon and n is a whole number corresponding to the valency of the metal M. Preferably the organo-metallic compound is present such that the atomic ratio M/Cr lies between 0.1 and 15.

According to the invention, the catalyst on the chromium compound base and the organo-metallic compound can be fed together into the (co) polymerisation medium in the gaseous phase, i.e. via a single feed line. In this case, they can be mixed prior to being fed into the (co) polymerisation medium. This mixing can be achieved in particular in the presence of ethylene and possibly another alpha-olefin, in such a way as to obtain a prepolymer powder which is immediately active in the conditions of (co) polymerisation in the gaseous phase, in particular by the process described in the French patent application No. 2 570 381. According to a further aspect of the invention, the catalyst on the chromium compound base and the organo-metallic compound can be fed separately into the (co) polymerisation medium, i.e. via two separate feed lines. Moreover, this latter variant can be combined with the first, i.e. part of the organo-metallic compound can be fed mixed with the catalyst and the other part fed separately apart from the catalyst. The (co) polymerisation is carried out in the gaseous phase in a reactor with fluidised and/or mechanically agitated bed, under pressure lying between 0.5 and 5 MPa and at a temperature lying generally between 50 and 120°C.

The organo metallic compound of aluminium is preferably an alkyl of aluminium such as tri isobutyl aluminium, triethyl aluminium or tri-n-octyl aluminium.

The compound comprising chromium may be a di keto compound of chromium such as chromium acetylacetonate, a chromium salt such as chromium acetate monohydrate or a chromium oxide such as chromium trioxide.

The invention also includes a catalyst whenever prepared by the appropriate steps of the above process. The invention further includes the polymerisation products of the process for the polymerisation of ethylene or the copolymerisation of ethylene and at least one higher olefin comprising 3 to 12 carbon atoms.

The refractory oxide support material is preferably silica. Examples of preferred types of silica are microspheroidal silica and silica gel. Other refractory oxides such as alumina, zirconium oxide, thorium oxide, titanium oxide or mixtures or co-precipitates of at least two of the aforesaid compounds may also be used.

The invention makes it possible to manufacture, with a relatively high yield in relation to the catalyst, a polymer or copolymer of ethylene having a particularly broad distribution of the molecular masses, characterised by the fact that the ratio between the weight average molecular weight, Mw, and the number average molecular weight, Mn, is greater than 10 and preferably equal to or greater than 12 and the melt index (MI21.6), measured at 190°C under a loading of 21.6 kg, according to ASTM D standard D 1238 condition F, is greater than 15 grammes in 10 minutes. These polymers are particularly suited to the manufacture of hollow bodies or film by extrusion or by blown extrusion.

Example 1

a) Preparation of an Activated Catalyst

Into a fluidised bed reactor there is fed, under a current of nitrogen at ambient temperature (20°C), 30 g of a silica sold by Joseph Crosfield and Sons of Warrington in Great Britain under the commercial name "SD 216" (R). The fluidised bed reactor is then heated to 500°C for 4 hours. At the end of this time the reactor is cooled down to the ambient temperature (20°C), and there is fed into it 35.5 ml of a solution containing 0.650 mols of triisobutylaluminium per litre of n hexane. Then the fluidised bed reactor is heated again to 250°C for 3 hours, then to 800°C for 4 hours. Subsequent to this 7 hour drying period, the reactor is cooled down again to the ambient temperature (20°C) and there is fed into it 30 ml of a solution containing 1.01 g of acetylacetonate of chromium in toluene, the temperature of the reactor being then taken up to 250°C for 3 hours. The solid obtained is then subjected to thermal activation treatment, consisting of replacing the nitrogen circulating in the fluidised bed reactor by dry air and heating the fluidised bed reactor to 580°C for 4 hours. The catalyst (A) activated in this way is cooled down to the ambient temperature (20°C) and stored under nitrogen atmosphere. It contains 1.40% of aluminium and 0.36% of chromium by weight.

b) Preparation of a Prepolymer

Into a 5 litre stainless steel reactor, equipped with an agitation system rotating at 350 rpm and containing already 2 litres of n hexane, there is fed at ambient temperature (20°C) and under nitrogen atmosphere 10 g of catalyst (A) prepared previously and 0.48 millimols (176 mg) of tri-n-octylaluminium (TNOA).

Then the reactor is heated to 75°C before feeding in ethylene at a constant flow rate of 90 g/h. At the end of 70 minutes a suspension is obtained of a prepolymer (B) which is cooled down to ambient temperature (20°C) and to which is added 0.38 millimols (139 mg) of TNOA. After drying under dry nitrogen in a rotating evaporator, 115 g of prepolymer (B) in the form of a powder made up of particles containing $6.10^{-3}$ millimols of chromium per gramme of prepolymer is obtained.

c) Polymerisation in the Gaseous Phase

Into a 2.6 litre stainless steel reactor, equipped with a helicoidal agitator rotating at 250 rpm and heated to 100°C, there is fed under nitrogen atmosphere, in the form of a charge powder, 200 grammes of a perfectly inert and anhydrous polyethylene powder prepared previously in the same conditions of polymerisation, and then 0.25 millimols of triethylaluminium (TEA). After the time needed for dispersion of the TEA in the charge powder, i.e. about 15 minutes, into the reactor is fed 8.51 grammes of prepolymer (B) prepared previously, then hydrogen until a pressure of 0.30 MPa is obtained and finally ethylene until a total pressure of 0.74 MPa is obtained. The total pressure is maintained for the entire duration of polymerisation by the addition of ethylene. At the end of 2 hours reaction, 400 grammes of polyethylene have been produced having the following characteristics:

- Chromium content $12.5 \, 10^{-5}$ millimols of chromium per gramme of polyethylene (i.e. approx. 6.5 ppm of chromium).
- Bulk density - 0.28 g/ml.
- Melt index (MI21.6) measured under a load of 21.6 kg at 190°C per ASTM standard D 1238, condition F = 20.1 g/10 minutes.
- Molecular weight distribution (Mw/Mn) measured by G.P.C. = 10.1.
- Flow parameter, calculated per the equation.

$$n = \log (MI21.6/MI8.5)/\log (21.6/8.5) = 2.37.$$

(MI8.5 being the melt index measured using a loading of 8.5 kg at 190°C).
- Density = 0.947.

Example 2

a) Preparation of an Activated Catalyst

30 g of a silica sold by Joseph Crosfield & sons, Warrington, Great Britain, under the trade name "SD 216"[R], is introduced into a reactor in a current of nitrogen, at ambient temperature (20°C). The fluidized bed reactor is then heated to 500°C for 4 hours. At the end of this time, the fluidized bed reactor is cooled to ambient temperature (20°C), and 0.54 g of divalent chromium acetate monohydrate and 22.2 mmol of aluminium triisobutyl in 35.5 ml of n-hexane are added. The fluidized bed reactor is then heated again to 250°C for 3 hours. The solid obtained is then subjected to a thermal activation consisting of replacing the nitrogen circulating in the fluidized bed reactor by dry air and heating the reactor to 570°C for 4 hours. The catalyst (C) thus activated is cooled to ambient temperature (20°C) and is kept in an atmosphere of nitrogen. It contains 1.40% by weight of aluminium and 0.24% by weight of chromium.

b) Preparation of a Prepolymer

10 g of the catalyst (C) previously prepared, and 0.48 mmol (176 mg) of tri-n-octyl aluminium (TNOA) are introduced, at ambient temperature (20°C) and in an atmosphere of nitrogen, into a 5 litre stainless steel reactor provided with a stirring system rotating at 350 rpm, and containing 2 litres of n-hexane.

The reactor is heated to 75°C, and ethylene is introduced at a constant rate of 90 g/h. After 70 minutes, a suspension of a prepolymer (D) is obtained; this is cooled to ambient temperature (20°C), and 0.38 mmol (139 mg) of TNOA, is added to it. After drying in dry nitrogen, in a rotary evaporator, 115 g of pre-polymer (D), in the form of a powder consisting of particles containing 4 x $10^{-3}$ mmol of chromium per g of prepolymer, is obtained.

c) Gaseous Phase Polymerisation

200 g of an inert and anhydrous polyethylene powder, previously prepared, is introduced, in an atmosphere of nitrogen, into a 2.6 litre stainless steel reactor, provided with a helical stirrer rotating at 250 rpm, and heated to 100°C. 0.2 mmol of aluminium tri-ethyl (TEA) is then introduced. After the time necessary for dispersing the TEA in the charge powder, i.e. about 15 minutes, 12.7 g of the previously prepared prepolymer (D) is introduced into the reactor; hydrogen is then introduced until a pressure of 0.30 MPa is obtained and finally ethylene is introduced until a total pressure of 1.11 MPa is obtained. The total pressure is maintained throughout the whole of the period of polymerisation by the addition of ethylene. After reacting for 2 hours, 400 g of polyethylene, having the following characteristics, was produced:
- Chromium content = 12.5 x $10^{-5}$ mmol of chromium/g of polyethylene (i.e. about 6.5 ppm of chromium).

- Bulk density = 0.32 g/ml.
- Melt index (MI21.6), measured under a load of 21.6 kg at 190°C, according to the standard ASTM D 1238, condition F = 23.7 g/10 minutes.
- Distribution of the molecular masses (Mw/Mn), measured by GPC, = 13.3.
- Flow parameter calculated according to the equation:

$$n = \log (MI21.6/MI8.5)/\log (21.6/8.5) = 2.53$$

(MI8.5 is the melt index measured under a load of 8.5 kg at 190°C).
- Density = 0.946.

Example 3 (comparative)

a) Preparation of an Activated Catalyst

30 g of a silica sold by Joseph Crosfield & Sons, Warrington, Great Britain, under the trade name "SD 216"[R] is transferred to a fluidized bed reactor in a current of nitrogen at ambient temperature (20°C). The fluidized bed reactor is heated for 4 hours at a temperature of 500°C in order to dry the silica. At the end of this time, the fluidized bed reactor is cooled to ambient temperature and 35.5 ml of a solution containing 1.01 g of chromium (III) acetyl acetonate in n-hexane is added. The fluidized bed reactor is heated again to 500°C for 4 hours. The solid obtained is then subjected to a thermal activation treatment consisting of replacing the nitrogen circulating in the fluidized bed reactor by dry air, and heating the fluidized bed reactor to 570°C for 4 hours. The catalyst (E), thus activated, is cooled to ambient temperature (20°C) and is kept under an atmosphere of nitrogen. It contains 0.40% by weight of chromium.

b) Preparation of a Prepolymer

The procedure is exactly the same as for Example 1b, except that catalyst (E) instead of catalyst (A) is introduced into the reactor. A prepolymer (F) containing 6.69 . $10^{-3}$ mmol of chromium/g of prepolymer is obtained.

c) Gaseous Phase Polymerisation

The procedure is exactly the same as that for Example 1c, except for the fact that 7.25 g of the prepolymer (F), instead of 8.51 g of prepolymer (B), and ethylene are introduced into the reactor, such as to produce a total pressure of 1.05 MPa instead of 0.74 MPa. After 2 hours, 400 g of polyethylene possessing the following characteristics is obtained:

- Chromium content = 12.5 x 10$^{-5}$ mmol of chromium/g of polyethylene (i.e. about 6.5 ppm of chromium).
- Bulk density = 0.33 g/ml.
- Melt index (MI21.6) = 13.6 g/10 minutes.
- Distribution of the molecular masses (Mw/Mn), measured by GPC, = 8.9.
- Flow parameter = 2.44
- Density = 0.947.

## Example 4

### a) Preparation of an Activated Catalyst

Into a fluidised bed reactor is introduced in a nitrogen current at ambient temperature (20°C) 35 g of a silica sold by Joseph Crosfield and Sons of Warrington, U.K., under the name "SD 216" (R), followed by 14.4 ml of an aqueous solution containing 288 mg of chromium oxide (VI). The fluidised bed reactor is then heated to 500°C for 4 hours. After this time the fluidised bed reactor is cooled to ambient temperature (20°C) and 35.5 ml of a solution containing 0.625 mole of triisobutylaluminium per litre of n-hexane is introduced. The fluidised bed reactor is reheated to 500°C for 4 hours. The solid obtained is then subjected to a thermal activation, in which the nitrogen circulating in the fluidised bed reactor is replaced by dry air and the fluidised bed reactor heated to 575°C for 4 hours. The catalyst (G) thus activated is cooled to ambient temperature (20°C) and kept in a nitrogen atmosphere. It contains 1.37% aluminium and 0.33% chromium by weight.

### b) Preparation of a Prepolymer

Into a 5-litre stainless steel reactor fitted with an agitator system operating at 350 revolutions per minute, containing 2 litres of n-hexane are introduced, at ambient temperature (20°C) and in a nitrogen atmosphere, 10 g of the catalyst (G) prepared previously and 0.48 millimol (176 mg) of tri-n-octyl aluminium (TNOA).

The reactor is then heated to 75°C and ethylene introduced at a constant rate of 90 g/h. After 70 minutes a prepolymer suspension (H) is obtained, which is cooled to ambient temperature (20°C) and 0.38 millimol (139 mg) of TNOA added. After drying, in dry nitrogen, in a rotary evaporator, 115 g of prepolymer (H) is obtained in the form of a powder consisting of particles containing 5.5 x 10$^{-6}$ mol chromium per gram of prepolymer.

### c) Gas Phase Polymerisation

Into a 2.6 litre stainless reactor fitted with a helicoidal agitator operating at 250 revolutions per minute and heated to 100°C is introduced in a nitrogen atmosphere, in the form of charge powder, 200 grams of an inert anhydrous polyethylene powder prepared beforehand in the same polymerisation conditions followed by 0.25 millimol of triethyl aluminium (TEA). After allowing time for the TEA to disperse into the charge powder, approximately 15 minutes, 9.09 grams of prepolymer (H) prepared previously is introduced into the reactor followed by hydrogen until a pressure of 0.30 MPa is obtained and finally ethylene until a total pressure of 0.97 MPa is obtained. The total pressure is maintained throughout polymerisation by adding ethylene. After 2 hours' reaction time, 400 grams of polyethylene have been produced with the following specifications:

- chromium content = 12.5 x 10$^{-5}$ millimol chromium per gram of polyethylene (or approximately 6.5 ppm chromium).
- bulk density = 0.30 g/ml.
- melt index (MI 21.6) measured under a load of 21.6 kg at 190°C (according to standard ASTM D 1238, condition F) = 16.9 g/10 minutes.
- molar mass distribution (Mw/Mn) measured by GPC = 12.0.
- flow parameter calculated by the equation:

$$n = \log (MI\ 21.6/MI\ 8.5)/\log (21.6/8.5) = 2.47$$

(MI 8.5 being the melt index measured under a load of 8.5 kg at 190°C).
- density = 0.949.

## Example 5 (comparative)

### a) Preparation of Activated Catalyst

Into a fluidised bed reactor is introduced in a nitrogen current at ambient temperature (20°C) 30 g of a silica sold by Joseph Crosfield and Sons of Warrington, U.K., under the name "SD 216" (R). The fluidised bed reactor is then heated to 500°C for 4 hours to dry the silica. At the end of this time the fluidised bed reactor is cooled to ambient temperature and 35.5 ml of a solution containing 1.01 g chromium acetyl acetonate (III) and 22.2 millimol triisobutyl aluminium in n-hexane is introduced. The fluidised bed reactor is then again heated to 500°C for 4 hours. The solid obtained is then subjected to a thermal activation treatment, in which the nitrogen circulating in the fluidised bed reactor is replaced by dry air and the fluidised bed reactor heated to 570°C for 4 hours. The catalyst (I) thus activated is cooled to ambient temperature (20°C) and kept in a nitrogen atmosphere. It contains 1.58% aluminium and 0.40% chromium by weight.

b) Preparation of a Prepolymer

The procedure is exactly the same as in Example 1b except that catalyst (I) is introduced into the reactor in place of catalyst (A). The product is a prepolymer (J) containing 6.69 $10^{-3}$ miillimol chromium per gram of prepolymer.

c) Gas Phase Polymerisation

The procedure is exactly the same as in Example 1c except that 7.25 g of prepolymer (H) is introduced into the reactor instead of 8.51 g of prepolymer (B) and ethylene so as to obtain a total pressure of 1.05 MPa instead of 0.74 MPa. After 2 hours, 400 g of polyethylene is obtained with the following specifications:
- Chromium content = 12.5 x $10^{-5}$ millimol of chromium per gram of polyethylene (or approximately 6.5 ppm of chromium).
- Bulk density = 0.33 g/ml.
- Melt index ($MI_{21.6}$) = 16.9 g/10 minutes.
- Molar mass distribution (Mw/Mn) measured by GPC = 8.9.
- Flow parameter n = 2.44
- Density = 0.947.

**Claims**

1. A process for polymerisation of ethylene or copolymerisation of ethylene and at least one other alpha-olefin comprising from 3 to 12 atoms of carbon, preferably in the gaseous phase, the process being characterised by the catalyst being prepared by (a) depositing an organo-metallic compound of aluminium on a dried refractory oxide, (b) drying the product at a temperature of between 200°C and 800°C, (c) contacting the product with a compound comprising chromium, (d) thermally activating the product at a temperature of between 350°C and 900° under a non-reducing atmosphere and (e) the product being used in the polymerisation with an organo-metallic compound of formula $MR_n$ in which M is a metal selected from the group consisting of boron, aluminium, magnesium and zinc, R is an alkyl group made up of 1 to 12 atoms of carbon and n is a whole number corresponding to the valency of the metal M.

2. A process according to claim 1 in which the organo-metallic compound is present such that the atomic ratio M/Cr lies between 0.1 and 15.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 025 437 (NATIONAL PETRO CHEMICALS CORPORATION) <br> * claims 1,3,9,10,17,18 * <br> * page 4, line 32 - line 33 * <br> * page 4, line 49 * <br> --- | 1-2 | C08F4/69 <br> C08F10/02 |
| X | US-A-4 100 104 (STANLEY J. KATZEN) <br> * claims 1-3 * <br> * page 5, line 12 - page 6, line 4 * <br> --- | 1-2 | |
| A | DE-A-2 604 551 (BASF AKTIENGESELLSCHAFT) <br> * claim 1 * <br> * example 1 * | 1 | |
| | ----- | | |
| | | | TECHNICAL FIELDS SEARCHED (Int. Cl.5) |
| | | | C08F |

The present search report has been drawn up for all claims

| Place of search | Date of completion of the search | Examiner |
|---|---|---|
| THE HAGUE | 05 OCTOBER 1992 | FISCHER B.R. |